# EUROPEAN PATENT APPLICATION

(11) **EP 2 161 660 A2**
(43) Date of publication of application: **10.03.2010**
(21) Application number: 09169651.8
(22) Date of filing: 07.09.2009
(51) Int. Cl.: G06F 9/50

(54) **Information processing device having load sharing function**

(30) Priority: 09.09.2008 JP 2008231505
(71) Applicant: Fujitsu Limited, Kawasaki-shi, Kanagawa 211-8588 (JP)
(72) Inventor: Suzuki, Kazuhiro, Kawasaki-shi Kanagawa 211-8588 (JP)
(74) Representative: Fenlon, Christine Lesley

(57) **Abstract**

An information processing device realizing a plurality of virtual machines by switching over and thus operating a plurality of operating systems receives data, makes a backend driver unit associated with any one of the plurality of operating systems transmit data to a frontend driver unit of the associated operating system, determines operating system to which data is distributed in a way that refers to an identification table stored with identifying information for identifying the plurality of operating systems, and transmits data to the frontend driver unit of the determined operating system from the associated backend driver unit.

## Description

### FIELD

The embodiments discussed herein are related to a technology of sharing a load with a plurality of virtual machines.

### BACKGROUND

A dedicated load sharing (load balancing) device has been used for sharing a load with a plurality of servers. However, the number of load sharing systems which introduce load sharing software into computer have been increased over the recent years.

When a representative server into which LVS (Linux Virtual Server), for example, is introduced receives packets addressed to a representative IP address, the representative server distributes the packets to a plurality of other servers by use of NAT (network Address Translation), IP Tunneling, Direct Forwarding, etc.

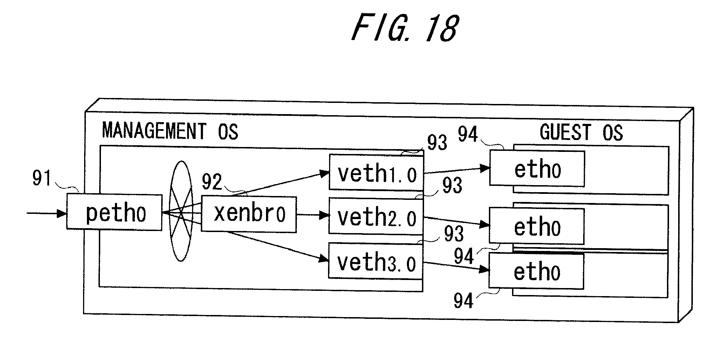

Further, as depicted in FIG. 18, a scheme that when a single computer physically actualizes a plurality of virtual machines, a load is shared with the virtual machines by a management OS forwarding the packets selectively to the respective virtual machines (guest OSs) is proposed.

Moreover, a technology disclosed in the following Patent documents are related to a load sharing system.

[Patent document 1]Japanese Patent Laid-Open Publication No.2007-206955
[Patent document 2]Japanese Patent Laid-Open Publication No.2005-190277

In the configuration of FIG. 18, however, the management OS forwards the packets in a way that distinguishes between forwarding destinations on the basis of IP addresses and MAC addresses, with the result that a forwarding route becomes complicated.

For instance, the management OS distributes the packets received via a physical interface 91 to virtual interfaces 93 through a virtual bridge interface 92, and forwards the packets to virtual interfaces 94 of the guest OS from the virtual interfaces 93.

Moreover, the configuration of FIG. 18 entails differentiating the IP addresses and the MAC addresses of the plurality of guest OSs when setting these addresses, and a problems is that the setting is so complicated that a mistake is easy to happen.

Such being the case, it is desirable to provide a technology which enables the setting or the forwarding route to be simplified.

### SUMMARY

For example, an information processing device having a load sharing function, a load sharing method, a load sharing program or a recording medium may be provided.

According to an embodiment of an aspect of the invention, an information processing device realizing a plurality of virtual machines by switching over and thus operating a plurality of operating systems, comprises: a receiving unit receiving data addressed to a representative address; a backend driver unit associated with any one of the plurality of operating systems and transmitting the data to the frontend driver unit of the associated operating system; and a distribution unit determining the operating system to which the data is distributed in a way that refers to an identification table stored with plural pieces of identifying information for identifying the plurality of operating systems respectively, transmitting the data to the frontend driver unit of the operating system from the associated backend driver unit.

Advantages of the embodiment will be set forth in part in the description which follows, and in part may be apparent from the description, or may be learned by practice of the invention. Advantages of the invention may be realized and attained by means of the elements and combinations particularly pointed out in the appended claims.
It is to be understood that both the foregoing general description and the following detailed description are exemplary and explanatory only and are not restrictive of the invention, as claimed.

### BRIEF DESCRIPTION OF DRAWINGS

FIG.1 is an explanatory diagram of a data forwarding function.

FIG.2 is a diagram of an information processing device having a load sharing function.

FIG.3 is a diagram of a hardware configuration of the information processing device.

FIG.4 is an explanatory diagram of a domain ID table and a backend driver table.

FIG. 5 is an explanatory diagram of a load sharing method.

FIG.6 is a diagram illustrating an example of making a distribution also to a real server.

FIG.7 is a diagram illustrating a table structure in a second embodiment.

FIG. 8 is an explanatory diagram of a load sharing method in the second embodiment.

FIG.9 is a diagram illustrating an example of a multi-layered system.

FIG.10 is a schematic diagram of an information processing device according to a fourth embodiment.

FIG.11 is an explanatory diagram of a guest management table.

FIG.12 is a diagram illustrating an example of the information processing device according to the fourth embodiment.

FIG.13 is a diagram illustrating an operation sequence of an OS status determining unit.

FIG. 14 is a diagram illustrating an example of the guest management table.
FIG.15 is an explanatory diagram of an operation of the OS status determining unit.
FIG. 16 is a diagram illustrating an example of migrating a guest OS.
FIG.17 is a diagram illustrating an example of realizing a distribution unit and a backend driver by driver OSs.
FIG.18 is a diagram illustrating a conventional information processing device including a load sharing function.

### DESCRIPTION OF EMBODIMENTS

### <First Embodiment>

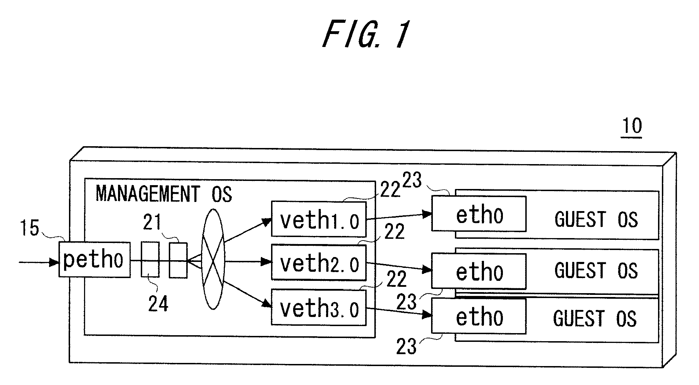

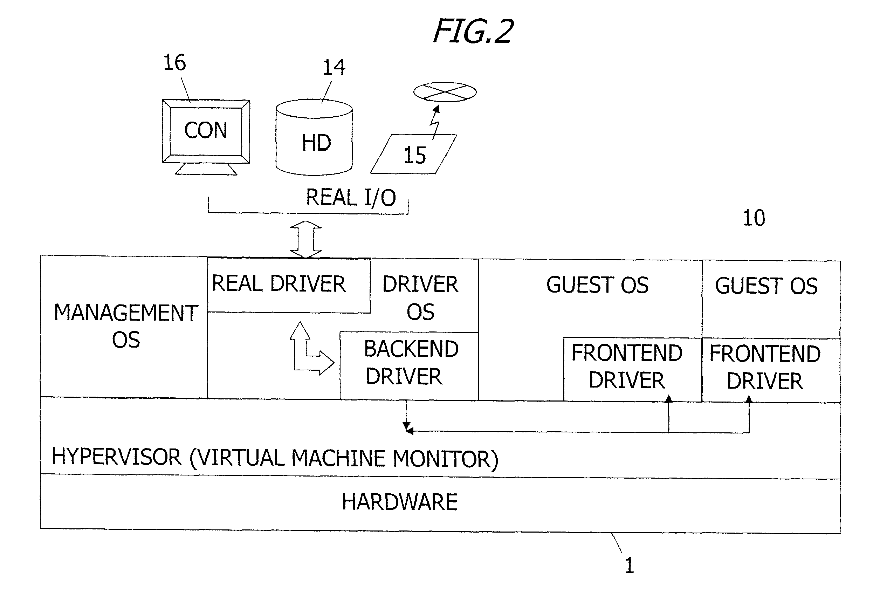

FIG. 1 is an explanatory diagram of functions of an information processing device having a data transfer function according to a first embodiment of the invention. FIG. 2 is an explanatory diagram of the information processing device having a load sharing (load balancing) function according to the first embodiment.
As illustrated in FIG. 1, an information processing device 10 in the first embodiment functions virtually as a plurality of servers by operating a plurality of guest OSs. Further, the information processing device 10 manages the plurality of guest OSs by operating a management OS. For example, the management OS distributes data received by a communication control unit 15 to the respective guest OSs via a distribution unit 21. Note that the servers realized by the plurality of guest OSs are virtual servers, and hence a communication control unit (front end driver unit) 23 of each server is also a virtual unit. Accordingly, a communication control unit (back end driver unit) 22 of the management OS, which is connected to the communication control unit 23, is likewise a virtual unit. Actually, the data is received and transferred via a memory etc. when the plurality of guest OSs and the management OS are executed on a time-division basis on a CPU of the information processing device 10.

FIG. 2 is a drawing illustrating a configuration of the information processing device 10 according to the first embodiment, in which especially a software configuration is depicted in the middle part thereof. As illustrated in FIG. 2, the information processing device 10 in the first embodiment takes a configuration that the management OS operates a plurality of virtual machines (VM: Virtual Machine) through a Hypervisor. Hardware 1 includes a processing device, a memory, etc., and executes programs read from a storage device 14, thereby realizing the functions of the management OS, a driver OS, the guest OS and the Hypervisor each illustrated in the middle part.

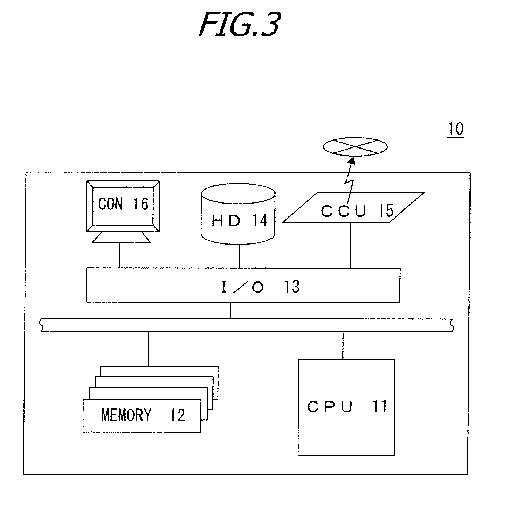

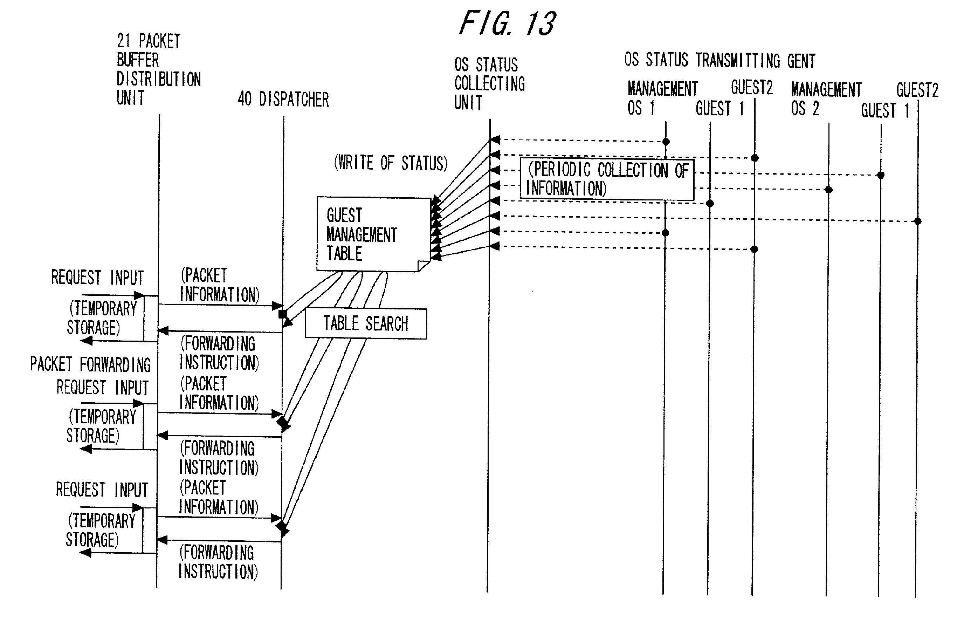

FIG. 3 is a diagram of a hardware configuration of the information processing device 10 according to the first embodiment.
As depicted in FIG. 3, the information processing device 10 is a computer including a processing device (e.g., a CPU (Central Processing Unit) 11, a main memory (given as [MEMORY] in FIG. 3) 12 and an input/output interface (abbreviated to [I/O] in FIG. 13) 13.
The first embodiment will hereinafter be described with reference to FIGS. 1 through 3.

Connected to the I/O interface 13 are the storage device (a hard disk drive [HD] by way of one example in FIG. 3) 14 stores data and software for an arithmetic process, the communication control unit (a network interface, abbreviated to [CCU] in FIG.3) 15 which controls communications with other computers, and a console (CON) 16. Further, the console 16 includes an operation unit (a keyboard etc.) by which an operator performs an input operation and a display unit for conducting a display output.

The information processing device 10 executes the processes based on the programs read from the storage device 14. Programs such as the management OS, the driver OS, the Hypervisor, the guest OS (the first OS), a frontend driver and a backend driver make the information processing device execute the processes which will be described later on, thereby realizing the virtual machine system.

The management OS is automatically started up when starting up the information processing device 10, and functions as a domain 0. The management OS is an OS for operating and managing the whole information processing device including a driver domain and a guest domain. Note that the management OS can function also as the driver OS.

Moreover, the management OS also actualizes the function of the distribution unit 21 which shares the load with the plurality of virtual machines. Namely, the CPU 11 serving as the distribution unit determines a server that distributes the data through the load sharing (balancing) process (a load balancing algorithm) such as round-robin and random order, and obtains identifying information of the guest OS associated with the server by referring to an identification table. Note that the identification table stores the identifying information, given as a domain ID in the first embodiment, for identifying each guest OS, and the server realized by the guest OS in a way that associates the domain ID and the server with each other.

Then, a backend driver name associated with the thus-obtained domain ID is acquired from a backend driver table, and the data is sent to the backend driver. Note that the backend driver table is stored with the domain ID identifying the guest OS and a driver name for specifying the backend driver for transmitting the data to the guest OS in the way of being associated with each other.

Moreover, the CPU 11 functions as the backend driver unit 22 according to the backend driver of the management OS, and functions as a frontend driver unit 23 according to the frontend driver of the guest OS. Note that the backend driver unit 22 of the management OS is provided in a one-to-one relationship with the frontend driver of each of the plurality of guest OSs, and transmits the data to the frontend driver unit 23 of the corresponding guest OS.

The Hypervisor dispatches the respective OSs, emulates a privilege command executed by each OS, and controls the hardware related to the CPU 11. Incidentally, the Hypervisor may include the management OS.

The driver OS controls the storage device 14, the communication control unit 15 and the I/O device such as the console 16. A scheme in the VM system is not that each of the plural guest OSs includes the I/O device, but that the driver OS is requested to execute input and output of each guest OS and the input/output control of each guest OS is virtualized through the driver OS as a proxy.

For example, in a case of transmitting the data to the guest OS from the management OS, the backend driver of the management OS transfers the data to the Hypervisor. The Hypervisor writes the transferred data to a memory area used by the frontend driver of the guest OS, thus virtually transmitting the data.

The driver OS is enabled to operate on the management OS and on the guest OS. Note that when operating the driver OS on the guest OS, this guest OS becomes the driver OS.

The guest OS virtually actualizes the functions of the information processing device by use of the hardware resources allocated via the Hypervisor. Each guest OS is the same as the OS installed into the normal information processing device, and the guest OSs actualizes the functions (virtual machines) of the information processing devices.

The communication control unit 15 is a so-called network adaptor which controls the communications with other computers via the network such as the Internet. The communication control unit 15 corresponds to a transmitting unit transmitting data to one other computer and a receiving unit receiving the data from one other computer.

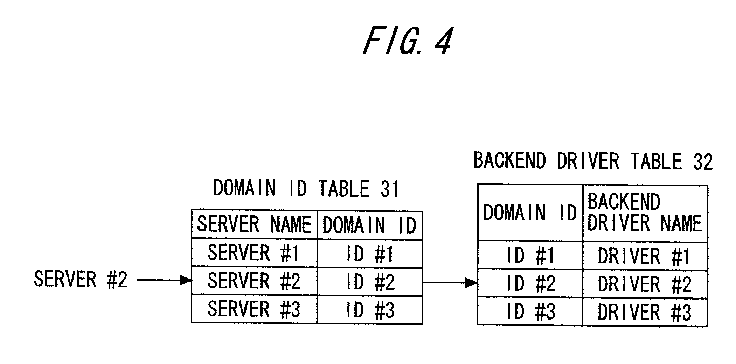

The storage device 14 or the main memory 12 stores a domain ID table (identification table) 31 and a backend driver table 32 illustrated in FIG. 4.

For example, as depicted in FIG. 4, the distribution unit 21 acquires a domain ID #2 associated with the server #2 by referring to the domain ID table 31 when distributing the data to a server #2. Moreover, the distribution unit 21 acquires a driver name #2 of the backend driver associated with the domain ID #2.

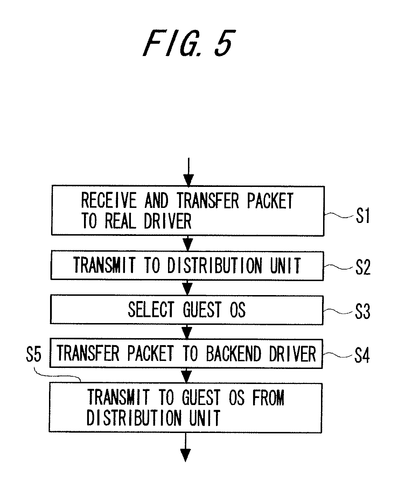

FIG. 5 is an explanatory diagram illustrating how the information processing device 10 having the configuration described above shares the load.

To begin with, the network adaptor (network interface) 15 transfers a received packet to a real driver 24 of the driver OS (S1) upon receiving the packet.

The real driver 24 transmits the received packet to the distribution unit 21 (S2).

The distribution unit 21 checks a destination IP address of thepacket. Then, if the IP address is a representative IP address for sharing the load, the distribution unit 21 selects a server which distributes the packets, and acquires the domain ID, e.g., the domain ID #2 of the guest OS actualizing the server by referring to the domain ID table 31 (S3). A method by which the distribution unit 21 selects the server distributing the packets may involve using any one of whatever known methods such as round-robin and random order for determining the server in a predetermined sequence, and a method of determining the server based on a predetermined algorithm, corresponding to a source address and a type of the request.

Further, the distribution unit 21 refers to the backend driver table 32 illustrated in FIG. 4, and transfers the packet to the backend driver unit 22 associated with the domain ID determined in S3 as the distribution destination of the packet (S4).

The backend driver unit 22 transmits the packet from the distribution unit 21 to the frontend driver unit 23 of the corresponding guest OS (S5).

With this scheme, the load addressed to the representative address can be shared with the plurality of virtual servers.

For example, if the guest OSs are specified to the server functions of Web, an application, a database, etc., the processes can be executed with high efficiency as the whole device in such a way that the distribution unit 21 distributes the packets to the adaptive guest OSs based on the types of the requests of the received packets.

Further, the distribution unit 21 in the embodiment identifies each guest OS not from the address of each server but from the identifying information such as the domain ID on the occasion of distributing the packets to the respective servers, thus distributing the packets. In the case of sharing the load with the plurality of servers, the servers to which packets are distributed have been identified from addresses. Consequently, it was necessary to set addresses unique to the respective servers. In the first embodiment, however, each guest OS is identified from the identifying information, and hence the address of the guest OS can be set without any restrictions. For instance, the IP address and a MAC address in the guest OS can be set to the same values in other guest OSs. Accordingly, the address setting operation is facilitated, thereby enabling occurrence of a mistake to be restrained.

Moreover, since the forwarding of the packet to the guest OS does not entail an intermediary of a virtual bridge, a forwarding route is simplified, and it is feasible to prevent performance from declining.

### <Second Embodiment>

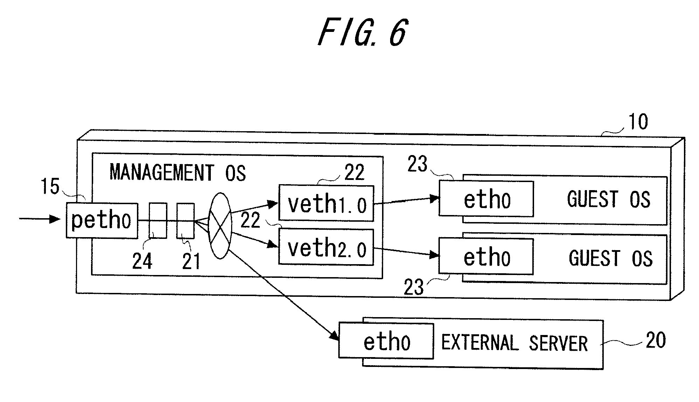

FIG. 6 depicts an example of distributing packets to another information processing device (real server) 20 as well as to a virtual server within the self-device.

A second embodiment is different from the first embodiment discussed above in terms of a configuration for distributing the packets to another information processing device. The repetitive explanations are omitted, while the same components are marked with the same numerals and symbols.

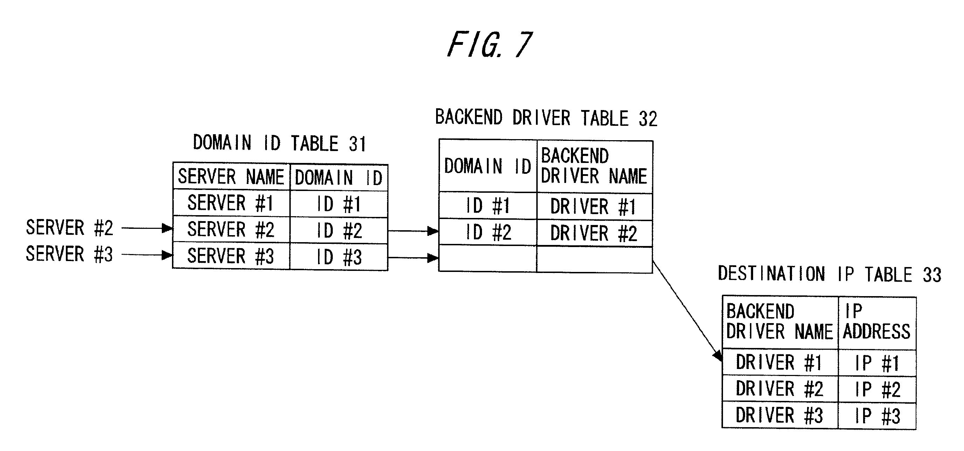

The storage device 14 or the main memory 12 in the second embodiment stores a destination IP table 33 in addition to the domain ID (identification) table 31 and the backend driver table 32 as illustrated in FIG. 7.

The destination IP table 33 stores an address of a real server which becomes a packet distribution destination. In the second embodiment, the domain ID of the packet distribution guest OS and the IP address of the real server are stored in the way of being associated with each other.

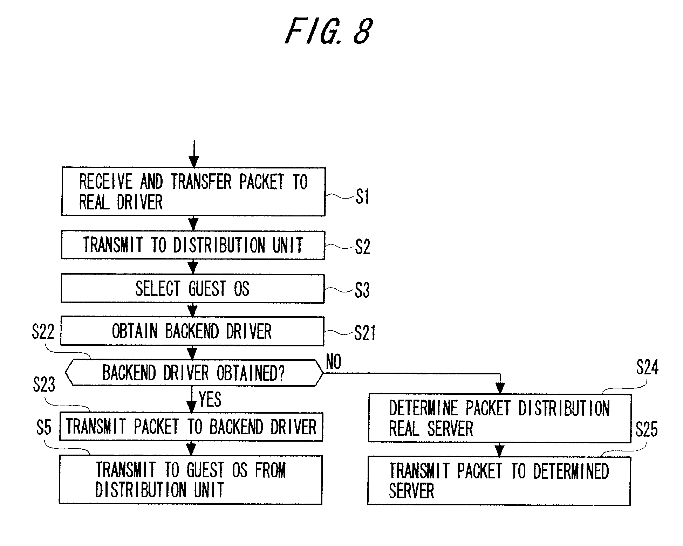

FIG. 8 is an explanatory diagram of a method by which the information processing device 10 having a configuration of the second embodiment shares the load.

The network interface 15transmits a received packet to the distribution unit 21 (S2) via the real driver 24 of the driver OS (S1) when receiving the packet. The distribution unit 21 determines the packet transfer server according to the predetermined algorithm such as Round Robin and obtains identifying information (domain ID) of the guest OS of the determined server from the domain ID table 31 (S3).

Further, the distribution unit 21 refers to the backend driver table 32 illustrated in FIG. 7, thus obtaining a backend driver name associated with the guest OS determined as the distribution destination (S21).

The distribution unit 21 decides whether or not the backend driver name associated with the determined guest OS is obtained from the backend driver table 32 (S22) . If the backend driver name is obtained, the distribution unit 21 transmits the packet to the backend driver unit 22 specified by the backend driver name (S23). For example, if the packet is distributed to the guest ID #3, the packet is transmitted to the backend driver unit 22 specified by the backend driver name #3.

The backend driver unit 22 transmits the packet from the distribution unit 21 to the frontend driver unit 23 of the associated guest OS (S5).

While on the other hand, if the backend driver unit 22 associated with the guest OS determined in S21 is not obtained, it means the guest OS does not exist within the information processing device 10and may exist outside the information processing device 10. Therefore, the distribution unit 21 acquires the packet distribution destination IP address by referring to the destination IP table 33. For example, if the packet is distributed to the guest ID #3, the IP address #3 of the real server 20 is determined (S24).

Then, the distribution unit 21 transmits the packet to the determined IP address via the communication control unit 15 (S25).

Thus, according to the second embodiment, the load can be shared in an environment where the virtual servers and the real servers exist in mixture.

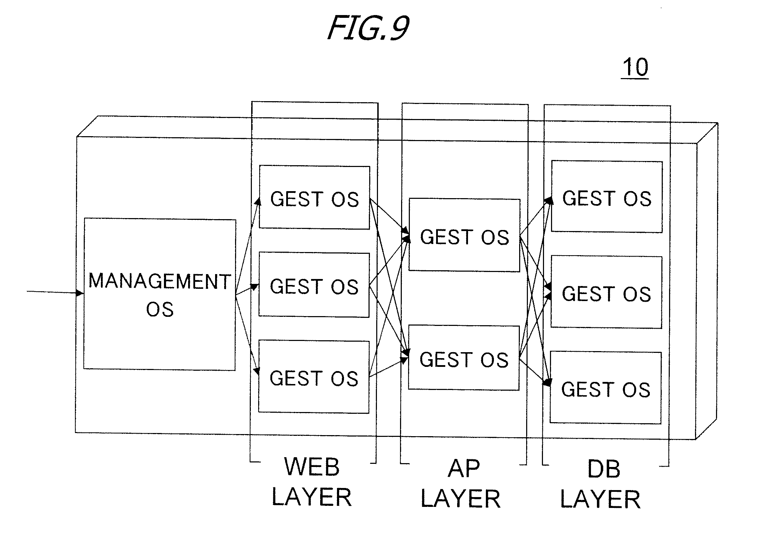

<Third Embodiment> FIG. 9 illustrates an example in which a multi-layered system is configured by a plurality of virtual machines.

A third embodiment aims at a multi-layered system and is different from the first embodiment or the second embodiment in terms of such a configuration that a guest OS of a frontend layer distributes a packet to a backend layer in the multi-layered system. The repetitive explanations are omitted, while the same components as those in the first embodiment or the second embodiment are marked with the same numerals and symbols.

As depicted in FIG. 9, the third embodiment takes a multi-layered configuration that a plurality of guest OSs is hierarchically provided, and an operating system belonging to the frontend layer distributes the data to the operating system belonging to the backend layer.

Especially, the third embodiment takes a 3-layered configuration such as a Web layer (a presentation layer, which is illustrates as [Web layer] in FIG. 9), an application layer (depicted as [AP layer] in FIG. 9) and a data layer (illustrated as [DB layer] in FIG. 9) sequentially from the front side of the packet forwarding route.

Each of the guest OSs belonging to the Web layer and the application layer actualizes the functions of the distribution unit 21, the backend driver unit 22 and the frontend driver unit 23 of the management OS, in addition to the function of the guest OS. The guest OS belonging to the data layer also actualizes the function of the frontend driver unit 23 in addition to the function of the guest OS.

Accordingly, in the case of distributing the packet to the guest OS from the management OS, as depicted in FIG. 5, the distribution unit 21 of the management OS determines the distribution server of the Web layer, obtains the domain ID associated with the determined distribution server by referring to the identification table, obtains the backend driver name associated with the domain ID by referring to the backend driver table, and transmits the packet to the backend driver unit 22 specified by the backend driver name.

Moreover, in the case of distributing the packet to the guest OS of the application layer from the guest OS of the Web layer, the guest OS of the Web layer realizes the function of the management OS in FIG. 5. The distribution unit 21 of the management OS of the Web layer determines the server of the application layer, obtains the domain ID associated with the server by referring to the identification table, obtains the backend driver name associated with the domain ID by referring to the backend driver table, and transmits the packet to the backend driver unit 22 specified by the backend driver name.

Further, in the case of distributing the packet to the guest OS of the data layer from the guest OS of the application layer, the guest OS of the application layer realizes the function of the management OS in FIG. 5. The distribution unit 21 of the management OS of the application layer determines the server of the data layer, obtains the domain ID associated with the server by referring to the identification table, obtains the backend driver name associated with the domain ID by referring to the backend driver table, and transmits the packet to the backend driver unit 22 specified by the backend driver name.

Moreover, an available configuration is that the guest OS of the Web layer or the application layer realizes the function of the management OS in FIG. 8 and includes the destination IP table similarly to the second embodiment. The distribution unit distributes the packet to the outside real server if the associated backend driver does not exist.

Thus, according to the third embodiment, the multi-layered system can be configured by one piece of hardware (information processing device).

### <Fourth Embodiment>

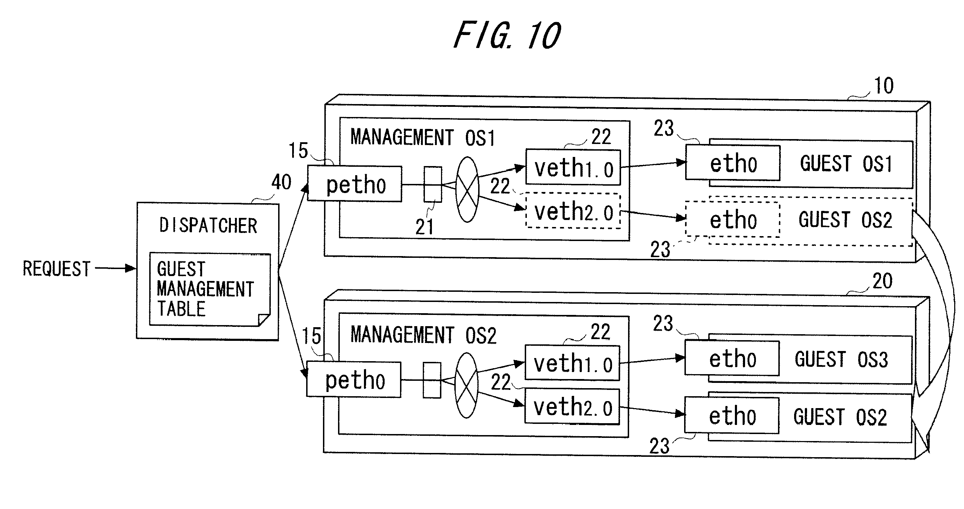

FIG. 10 is a schematic diagram of an information processing device according to a fourth embodiment.

The fourth embodiment includes a dispatcher (allocating unit) 40 managing which device in a plurality of information processing devices a guest OS belongs to and allocating a packet to the information processing device to which the guest OS forwarding the packet belongs. The system in the fourth embodiment includes a dispatcher 40, an information processing device 10 and an information processing device 20. The information processing device 10 is the same as in the first embodiment discussed above. Further, the information processing device 20 has the same hardware configuration as the information processing device 10 has. The guest OS provided in the information processing device 10 and the guest OS provided in the information processing device 20 operate independently of each other and are attached with the unique domain IDs.

The dispatcher 40 includes a destination management table, obtains a transmitting target guest OS by referring to the destination management table, and transmits a packet to the management OS to which the determined guest OS belongs by referring to a guest management table.

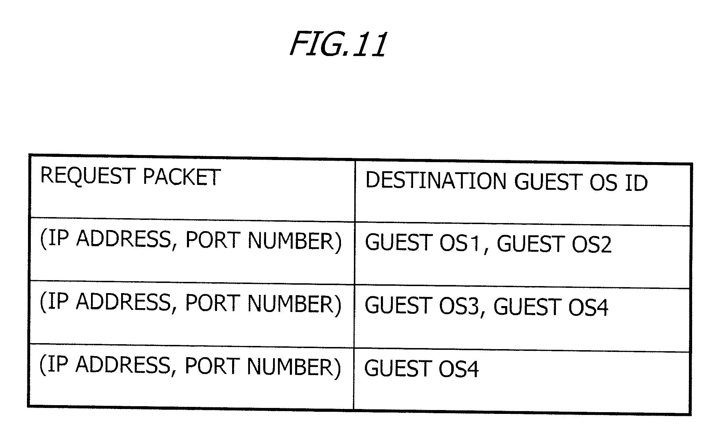

The destination management table stores information on a request packet and an ID of the guest OS in the way of being associated with each other as illustrated in FIG. 11.

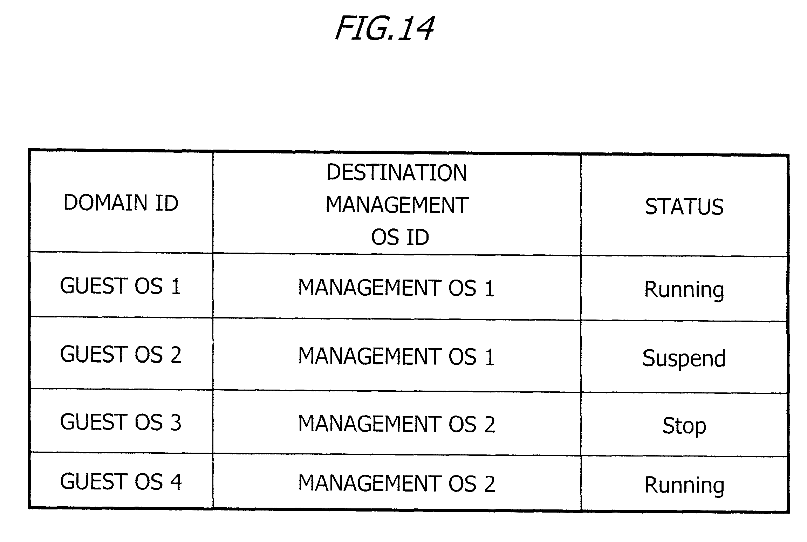

The guest management table stores a domain ID specifying each guest OS, an ID of the management OS to which the guest OS belongs and a status of the guest OS in the way of being associated with each other as depicted in FIG. 14.

The dispatcher 40 may be a dedicated device (hardware) having a circuit for performing the allocation, however, the information processing device may also realize the dispatcher 40 based on the software.

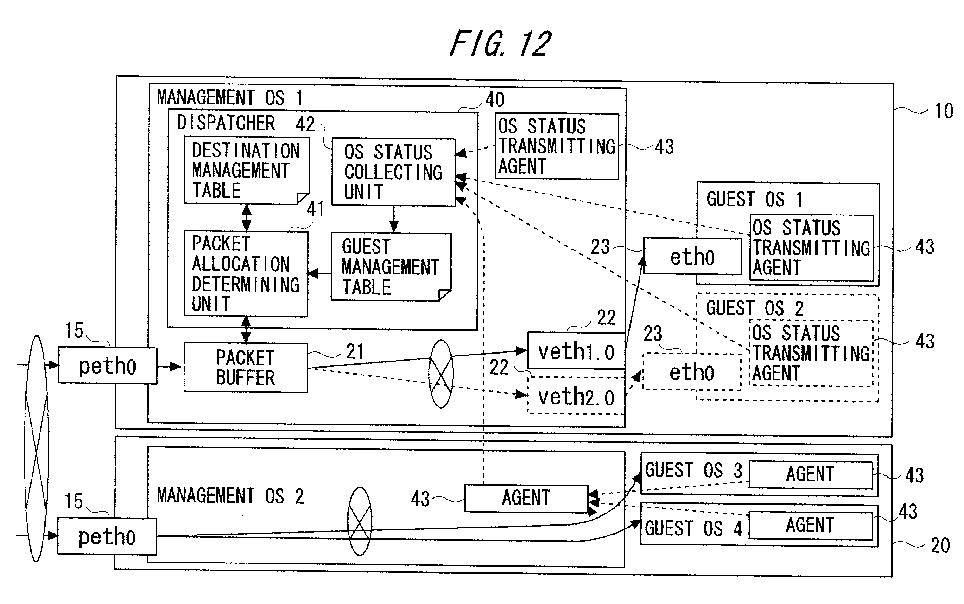

An example in FIG. 12 is that the management OS 1 of one information processing device 10 actualizes the function of the dispatcher 40.

In the information processing device 10 in FIG. 12, the dispatcher 40 includes an OS status determining unit 41 and an OS status collecting unit 42.

Further, each of the management OS 1 and the management OS 2 realizes a function of an OS status transmission agent (status notifying unit) 43. The OS status transmission agent 43 transmits a status of the guest OS to the OS status collecting unit 42.

Moreover, the guest OS also realizes the function of the OS status transmission agent 43.

The OS status transmission agent 43 of the guest OS notifies the OS status transmission agent 43 of the management OS, of items of information by way of an OS status such as a present status representing whether the guest OS is now running or suspended, the type of the function of the guest OS such as the Web and the database, and the information like the domain ID etc. associated with the guest OS. The OS status transmission agent 43 of each of the management OS 1 and the management OS 2 stores the OS status in the guest management table. Note that the communications of the OS status transmission agent within the information processing device 10 may involve using an arbitrary route such as XenBus and the Hypervisor. Further, the OS status transmission agent 43 of the management OS notifies the OS status collecting unit 42 of the management OS 1, of the OS status via the network from the communication control unit 15. Note that the OS status collecting unit 42 may also be notified of the OS status via the network from the guest OS.

FIG. 13 is a diagram illustrating an operation sequence thereof. Each OS status transmission agent 43 periodically collects the information and transmits the information to the OS status collecting unit 42. The OS status collecting unit 42 records the received status of each guest OS in the guest management table.

FIG. 14 depicts an example of the guest management table in which the OS status is recorded by the OS status collecting unit 42. The dispatcher 40 determines the packet forwarding guest OS in response to the request, and, if the guest OS determined as the forwarding destination by referring to the guest management table is normal, forwards the packet to the management OS to which the guest OS belongs.

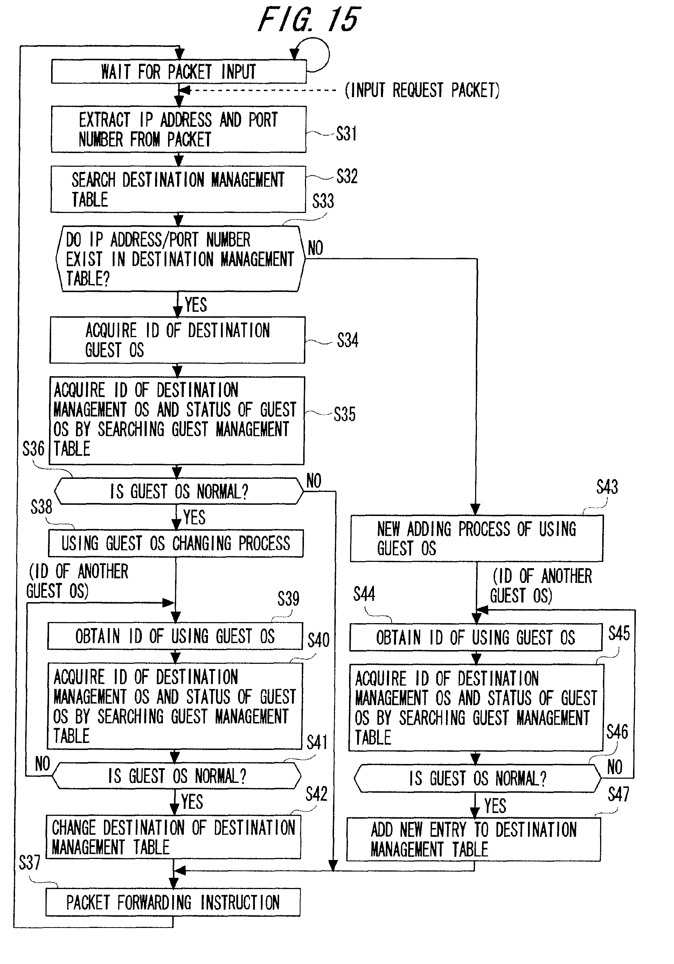

FIG. 15 is an explanatory diagram illustrating an operation of the OS status determining unit 41 which determines the status of the packet forwarding guest OS.

To start with, upon receiving a packet, the OS status determining unit 41 of the dispatcher 40 extracts an IP address and a port number from the packet (S31).

The OS status determining unit 41 determines by searching the destination management table (S32) whether or not the extracted IP address/port number exists in the destination management table (S33). If the IP address/port number exists in the destination management table, the OS status determining unit 41 acquires a domain ID of the guest OS associated with the IP address/port number (S34), and acquires an ID of the destination management OS associated with the domain ID acquired by searching the guest management table and a status of the guest OS (S35). Then, the OS status determining unit 41 determines whether or not the acquired status of the guest OS is normal in-operation status (running) or not (stop, suspend) (S36) and, if normal, instructs the distribution unit (packet buffer) 21 to forward the packet (S37).

Moreover, if the status of the guest OS is not normal, the OS status determining unit 41 diverts to a process of changing the guest OS to be utilized (S38), and determines the domain ID of the guest OS to be utilized in a way that refers to the domain ID table (S39). With respect to this guest OS, the OS status determining unit 41 acquires the ID of the destination management OS and the status of the guest OS by searching the guest management table (S40), and determines whether the status of the guest OS is normal or not (S41). The processes described above are repeated till the normal destination guest OS is determined.

Then, if the status of the destination guest OS is normal, the destination stored in the destination management table is changed to the guest OS determined to be normal (S42), and the distribution unit 21 is instructed to forward the packet (S37).

While on the other hand, if the IP address/port number extracted in S32 does not exist in the destination management table, the OS status determining unit 41 diverts to a process of newly adding the utilizing guest OS (S43), and determines the domain ID of the guest OS to be utilized in a way that refers to the domain ID table (S44). With respect to this guest OS, the ID of the destination management OS and the status of the guest OS are acquired by searching the guest management table (S45), then it is determined whether the status of the guest OS is normal or not (S46), and the processes are repeated till the normal destination guest OS is determined.

Then, if the status of the destination guest OS is normal, the OS status determining unit 41 adds a new entry to the destination management table (S47), and instructs the distribution unit 21 to forward the packet (S37).

The distribution unit 21 refers to the backend driver table and transmits the packet to the associated backend driver if the distribution guest OS belongs to the self-device. Further, the distribution unit 21 obtains the IP address of the information processing device 20 by referring to the destination management table if the distribution guest OS belongs to another information processing device 20, and transmits the packet via the network from the communication control unit 15.

Thus, according to the fourth embodiment, even when migrating (moving) the guest OS, the OS status transmission agent 43 of the information processing device 10 as the migrating destination notifies the OS status collecting unit 42 of the status of the guest OS, and reflects the notified OS status in the guest management table, whereby the dispatcher 40 can transmit the packet to the migrating destination guest OS.

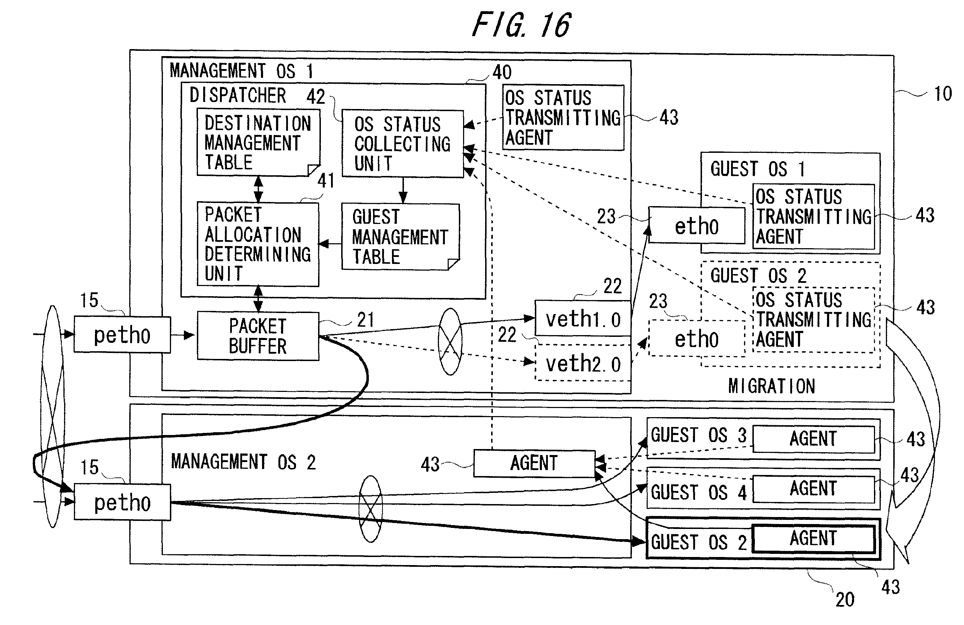

For example, as in FIG. 16, even when the guest OS is migrated to the information processing device 20 from the information processing device 10, the OS status transmission agent 43 of the guest OS 2 notifies the OS status collecting unit 42 of the OS status and reflects this OS status in the guest management table, thereby enabling the communications to be performed in the same way as before the migration.

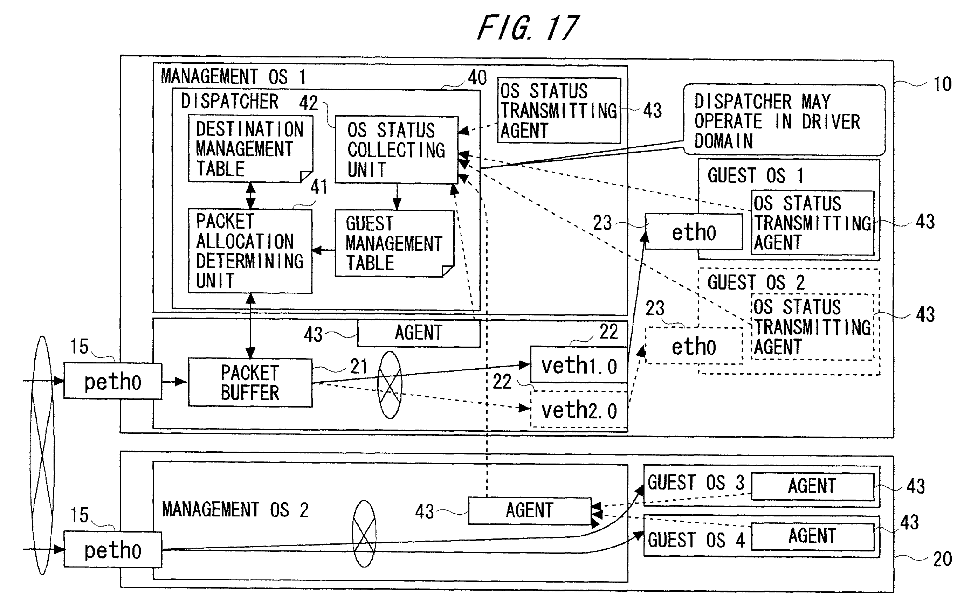

Moreover, in the first through fourth embodiments, the management OS includes the distribution unit 21, the backend driver 22 and the dispatcher 40, however, without being limited to this configuration, one other OS may also include these components. For instance, FIG. 17 depicts an example in which the distribution unit 21 and the backend driver 22 are realized by the driver OS. Note that the operations of the distribution unit 21 and of the backend driver 22 are the same as those described above. Furthermore, the dispatcher 40 may also be realized by the driver OS.

### <Others>

The present invention is not limited to the illustrative examples described above, but can be, as a matter of course, modified in many forms within the scope that does not deviate from the gist of the present invention.

Further, the load sharing program may be a program making a computer to execute the load sharing method. Still further, the recording medium may be a readable-by-computer recording medium recorded with this load sharing program. The computer is made to read and execute the program on the recording medium, whereby a function thereof can be provided.

Herein, the readable-by-computer recording medium connotes a recording medium capable of storing information such as data, programs, etc. electrically, magnetically, optically, mechanically or by chemical action, which can be read from the computer and so on. Among these recording mediums, for example, a flexible disc, a magneto-optic disc, a CD-ROM, a CD-R/W, a DVD, a DAT, an 8 mm tape, a memory card, etc. are given as those demountable from the computer.

Further, a hard disc, a ROM (Read-Only Memory), etc. are given as the recording mediums fixed within the computer.

In any of the above aspects, the various features may be implemented in hardware, or as software modules running on one or more processors. Features of one aspect may be applied to any of the other aspects.

The invention also provides a computer program or a computer programproduct for carrying out any of the methods described herein, and a computer readable medium having stored thereon a program for carrying out any of the methods described herein.

A computer program embodying the invention may be stored on a computer-readable medium, or it could, for example, be in the form of a signal such as a downloadable data signal provided from an Internet website, or it could be in any other form.

All examples and conditional language recited herein are intended for pedagogical purposes to aid the reader in understanding the invention.

## Claims

1. An information processing device realizing a plurality of virtual machines by switching over and thus operating a plurality of operating systems, comprising:
a receiving unit that receives data;
a backend driver unit associated with any one of the plurality of operating systems and that transmits data to a frontend driver unit of the associated operating system; and
a distribution unit that determines an operating system to which data is distributed in a way that refers to an identification table that stores plural pieces of identifying information for identifying the plurality of operating systems respectively, and transmits data to the frontend driver unit of the operating system from the associated backend driver unit.

2. The information processing device according to Claim 1, wherein IP addresses and MAC addresses of a plurality of frontend driver units are set to the same values as those of other frontend driver units.

3. The information processing device according to Claim 1 or 2, wherein if a driver table stored with an associative relationship between the plurality of operating systems and the backend driver units is not recorded with the backend driver associated with the operating system which distributes the data, the distribution unit refers to the destination table and thus transmits the data to an address of an external server associated with the operating system.

4. The information processing device according to any one of Claims 1 through 3, wherein the plurality of operating systems takes a hierarchy structure of forwarding the data to the operating system belonging to a backend layer from the operating system belonging to a frontend layer, and, if the plurality of operating systems belongs to the respective layers of the hierarchy, each operating system belonging to the frontend layer includes the distribution unit distributing the data to the plurality of operating systems belonging to the backend layer and the backend driver unit.

5. The information processing device according to any one of Claims 1 through 4, further comprising an OS status determining unit referring to a guest management table stored with information representing which information processing devices the plurality of operating systems executed within the self-device and the operating systems executed by another information processing device belong to, making the distribution unit transmit the data to the operating system via the backend driver unit in the case of transmitting the data to the operating system belonging to within the self-device, and making the distribution unit transmit the data to another computer via a transmitting unit in the case of transmitting the data to the operating system belonging to another information processing device.

6. The information processing device according to Claim 5, further comprising an OS status collecting unit storing statuses of the plurality of operating systems in the guest management table in response to notification given from a status notifying unit notifying of the statuses of the plurality of operating systems,
wherein the OS status determining unit narrows down the operating systems that are made to distribute the data on the basis of the statuses of the operating systems.

7. A load sharing method by which an information processing device realizing a plurality of virtual machines by switching over and thus operating a plurality of operating systems, executes:
a step of receiving data;
a step of transmitting the data from a backend driver unit associated with any one of the plurality of operating systems to a frontend driver unit of the associated operating system; and
a step of determining the operating system to which the data is distributed in a way that refers to an identification table stored with plural pieces of identifying information for identifying the plurality of operating systems respectively, transmitting the data to the frontend driver unit of the operating system from the associated backend driver unit, and thus sharing a load with the plurality of virtual machines.

8. The load sharing method according to Claim 7, wherein IP addresses and MAC addresses of a plurality of frontend driver units are set to the same values as those of other frontend driver units.

9. The load sharing method according to Claim 7 or 8, wherein if a driver table stored with an associative relationship between the plurality of operating systems and the backend driver units is not recorded with the backend driver associated with the operating system which distributes the data, the data is transmitted to an address of an external server associated with the operating system by referring to the destination table.

10. The load sharing method according to any one of Claims 7 through 9, wherein the plurality of operating systems takes a hierarchy structure of forwarding the data to the operating system belonging to a backend layer from the operating system belonging to a frontend layer, and, if the plurality of operating systems belongs to the respective layers of the hierarchy, each operating system belonging to the frontend layer includes the distribution unit distributing the data to the plurality of operating systems belonging to the backend layer and the backend driver unit.

11. The load sharing method according to any one of Claims 7 through 10, wherein there is made reference to a guest management table stored with information representing which information processing devices the plurality of operating systems executed within the self-device and the operating systems executed by another information processing device belong to, the data is transmitted to the operating system via the backend driver unit in the case of transmitting the data to the operating system belonging to within the self-device, and the data is transmitted to another computer via a transmitting unit in the case of transmitting the data to the operating system belonging to another information processing device.

12. The load sharing method according to Claim 11, wherein statuses of the plurality of operating systems are stored in the guest management table in response to notification given from a status notifying unit notifying of the statuses of the plurality of operating systems, and
the operating systems that are made to distribute the data are narrowed down based on the statuses of the operating systems.

13. A load sharing program making an information processing device realizing a plurality of virtual machines by switching over and thus operating a plurality of operating systems, execute:
a step of receiving data;
a step of transmitting the data from a backend driver unit associated with any one of the plurality of operating systems to a frontend driver unit of the associated operating system; and
a step of determining the operating system to which the data is distributed in a way that refers to an identification table stored with plural pieces of identifying information for identifying the plurality of operating systems respectively, transmitting the data to the frontend driver unit of the operating system from the associated backend driver unit, and thus sharing a load with the plurality of virtual machines.
